# EUROPÄISCHE PATENTSCHRIFT

(11) **EP 2 156 041 B1**
(45) Veröffentlichungstag und Bekanntmachung des Hinweises auf die Patenterteilung: **12.10.2016**
(21) Anmeldenummer: 08846104.1
(22) Anmeldetag: 22.10.2008
(51) Int. Cl.: F02M 26/00

(54) **ANTRIEBSSTRANG, INSBESONDERE FÜR LKW UND SCHIENENFAHRZEUGE**
DRIVE TRAIN, PARTICULARLY FOR TRUCKS AND RAIL VEHICLES
CHAÎNE CINÉMATIQUE, NOTAMMENT POUR DES CAMIONS ET DES VÉHICULES SUR RAILS

(30) Priorität: 30.10.2007 DE 102007052117
(43) Veröffentlichungstag der Anmeldung: 24.02.2010
(73) Patentinhaber: SteamDrive GmbH, 89522 Heidenheim (DE)
(72) Erfinder: BERGER, Jürgen, 89547 Gerstetten (DE); BARTOSCH, Stephan, 89192 Rammingen (DE)
(74) Vertreter: Dr. Weitzel & Partner
(86) Internationale Anmeldenummer: PCT/EP2008/008918
(87) Internationale Veröffentlichungsnummer: WO 2009/056253

(56) Entgegenhaltungen:
- WO-A-2004/033859
- WO-A-2006/138459
- DE-A1- 10 355 563
- DE-A1-102005 029 322
- DE-A1-102006 036 122

## Beschreibung

Die vorliegende Erfindung betrifft einen Antriebsstrang, insbesondere für Nutzkraftfahrzeuge wie zum Beispiel Lkw, Busse, Baumaschinen, Triebwagen von Schienenfahrzeugen oder Lokomotiven, mit einem Verbrennungsmotor und einem Dampfkreislauf, der zumindest teilweise mit bei dem Betrieb des Verbrennungsmotors anfallender Wärme betrieben wird. Sie ist jedoch auch bei Pkw oder anderen mobilen oder stationären Anlagen verwendbar.

Antriebsstränge, bei welchen neben einem Verbrennungsmotor als erstes Antriebsaggregat eine Expansionsmaschine in einem Dampfkreislauf als zweites Antriebsaggregat vorgesehen ist, sind bekannt. Der Verbrennungsmotor dient dem Antrieb des Antriebsstranges beziehungsweise des Fahrzeugs. Die Expansionsmaschine kann gemäß einer ersten Ausführungsform ebenfalls dem Antrieb des Fahrzeugs dienen, das heißt Antriebsleistung in den Antriebsstrang zur Übertragung auf Antriebsräder des Fahrzeugs einspeisen, oder ein Nebenaggregat, beispielsweise einen Generator, im Antriebsstrang antreiben. Zum Verdampfen des Arbeitsmediums des Dampfkreislaufes wird dabei herkömmlich Wärme aus dem Abgasstrom des Verbrennungsmotors verwendet, wobei ein das Arbeitsmedium des Dampfkreislaufes führender Wärmetauscher im Abgasstrom des Verbrennungsmotors angeordnet ist und durch das Abgas derart beaufschlagt wird, dass die Wärme aus dem Abgas in das Arbeitsmedium übertragen wird.

Herkömmlich wird somit Wärme, die ohne Vorsehen des Dampfkreislaufes und Nutzen der Abgaswärme über einen Auspuff an die Umgebung abgegeben würde, zur Dampferzeugung verwendet. Der erzeugte Dampf wird dann durch die Expansionsmaschine geleitet, in welcher er unter Abgabe von Arbeit expandiert. Anschließend wird der expandierte Dampf durch einen Kondensator geführt, in welchem er unter Abgabe von Wärme an das Fahrzeugkühlsystem kondensiert wird, um anschließend im flüssigen Zustand über eine Pumpe wieder dem Wärmetauscher im Abgasstrom, auch Dampferzeuger genannt, zugeleitet zu werden.

Das Vorsehen eines Dampfkreislaufes führt herkömmlich demnach dazu, dass über das Fahrzeugkühlsystem mehr Wärme abgeführt werden muss, und das Fahrzeugkühlsystem entsprechend leistungsfähiger ausgelegt werden muss. Beispielsweise muss ein Kühlluftstrom von einem Ventilator des Fahrzeugkühlsystems durch den Kondensator geleitet werden.

In jüngerer Zeit werden Antriebsstränge, insbesondere von Kraftfahrzeugen, mit einer sogenannten Abgasrückführung (AGR) ausgerüstet, um die Emissionswerte des Verbrennungsmotors an die gesetzlich vorgegebenen Anforderungen anzupassen. Hierbei wird Abgas von der Abgasseite des Verbrennungsmotors auf die Frischluftseite des Verbrennungsmotors geleitet und mit Frischluft gemischt. Das Gemisch wird dann zur Verbrennung gemeinsam mit Kraftstoff in die verschiedenen Zylinder des Verbrennungsmotors eingeleitet, verdichtet und unter Abgabe von Arbeit verbrannt. Dabei wirkt der Anteil von Abgas sozusagen als Inertgas bei der Verbrennung.

Der in der Abgasrückführung auf die Frischluftseite geleitetet Anteil des Abgasstromes muss aufgrund seiner hohen Temperatur, mit welcher er aus dem Verbrennungsmotor austritt, gekühlt werden. Dies erfolgt wiederum herkömmlich über das Fahrzeugkühlsystem, und zwar mit Kühlwasser in einem entsprechend in der Abgasrückführung vorgesehenen Wärmetauscher. Die über die Abgasrückführung in das Kühlwasser eingeleitete Wärme muss entsprechend über den Fahrzeugkühler an die Umgebung abgegeben werden, was wiederum eine große Kühlerfläche oder stark erhöhter Antriebsleistung für den Kühlerlüfter erfordert, und gegebenenfalls eine entsprechend starke Kühlwasserpumpe, um einen großen Kühlwasserstrom im Kühlwasserkreislauf umzuwälzen.

Bei Antriebssträngen, insbesondere in Kraftfahrzeugen, mit Abgasrückführung und einem Dampfkreislauf wird demnach eine besonders große Wärmemenge in das Fahrzeugkühlsystem eingetragen.

Die in das Fahrzeugkühlsystem eingetragene Wärmemenge kann noch dadurch vergrößert werden, dass der Antriebsstrang mit einem sogenannten aufgeladenen Verbrennungsmotor versehen ist. Bekanntlich wird bei einer solchen Aufladung eine Abgasturbine im Abgasstrom angeordnet, welche einen Verdichter antreibt, der Frischluft für die Verbrennung in dem Verbrennungsmotor verdichtet. Bei der Verdichtung erwärmt sich die Frischluft und muss entsprechend, bevor sie in den Verbrennungsmotor eingeleitet wird, wieder gekühlt werden. Dies erfolgt herkömmlich ebenfalls über den Fahrzeugkühler, in der Regel über einen Luft-Luft-Wärmetauscher im Unterschied zum Abkühlen des Kühlwassers in einem Luft-Wasser-Wärmetauscher. Auch dieser Luft-Luft-Wärmetauscher muss entsprechend leistungsstark ausgelegt werden.

Die Offenlegungsschrift DE 10 2006 036 122 A1 beschreibt eine Antriebseinrichtung mit einem Verbrennungsmotor, der einen Abgasstrom erzeugt. Ein Teil des Abgases wird mittels einer Abgasrückführung auf die Frischluftseite des Verbrennungsmotors zurückgeführt. In der Abgasrückführung ist ein Wärmetauscher angeordnet, mittels welchem Wärme aus dem rückgeführten Abgas in einen Arbeitsmediumkreislauf mit einer Expansionsmaschine übertragen wird. Somit kann ein Teil der Wärme der Abgasführung in der Expansionsmaschine genutzt werden. Diese Wärmenutzung ist jedoch noch nicht optimal.

Die Offenlegungsschrift WO 2004/033859 A beschreibt ebenfalls eine Antriebseinrichtung mit Verbrennungsmotor bei dem die Wärme aus der Abgasrückführung und dem Abgasstrang einem Kreisprozess zugeführt wird.

Der vorliegenden Erfindung liegt die Aufgabe zugrunde, einen Antriebsstrang, insbesondere für ein Kraftfahrzeug, beispielsweise Schienenfahrzeug oder LKW, jedoch auch Pkw anzugeben, welcher hinsichtlich der Emissionswerte des Verbrennungsmotors und des Kraftstoffbedarfs optimiert ist und zugleich eine Belastung des Kühlsystems durch einen vergleichsweise geringeren Wärmeeintrag in dieses vermindert.

Die erfindungsgemäße Aufgabe wird durch einen Antriebsstrang mit den Merkmalen von Anspruch 1 gelöst. In den abhängigen Ansprüchen sind vorteilhafte und besonders zweckmäßige Ausgestaltungen der Erfindung angegeben.

Der erfindungsgemäße Antriebsstrang weist einen Verbrennungsmotor auf, der einen Abgasstrom erzeugt. Der Abgasstrom wird in einer Abgasleitung geführt, die dementsprechend an dem Verbrennungsmotor angeschlossen ist. Selbstverständlich können auch mehrere Abgasleitungen parallel und/oder in Reihe zueinander vorgesehen sein.

Ferner ist ein Zuluftleitungssystem vorgesehen, welches wenigstens eine Zuluftleitung zum Zuführen eines Zuluftstromes für die Verbrennung im Verbrennungsmotor umfasst. Das Zuluftleitungssystem ist entsprechend am Verbrennungsmotor angeschlossen. Bei der Zuluft kann es sich um Frischluft oder, wie dargestellt, um ein mit Abgas gemischtes Frischluft-Abgas-Gemisch handeln, für welches dann im Zuluftleitungssystem entsprechend eine Frischluftleitung und eine Rückführungsleitung von der Abgasseite auf die Frischluftseite des Verbrennungsmotors vorgesehen sind.

Der erfindungsgemäße Antriebsstrang weist ferner einen Dampfkreislauf auf, der mit einem Arbeitsmedium betrieben wird, das in einem Wärmetauscher verdampft, dann durch eine Expansionsmaschine unter Abgabe von Arbeit expandiert und anschließend in einem Kondensator kondensiert wird. Das Arbeitsmedium kann beispielsweise Wasser oder eine andere verdampfungsfähige Flüssigkeit sein.

Erfindungsgemäß ist der Wärmetauscher oder zumindest ein Wärmetauscher, mittels welchem das Arbeitsmedium im Dampfkreislauf zumindest teilweise verdampft wird, in der Rückführungsleitung für Abgas, die insbesondere in einer Frischluftleitung mündet, vorgesehen, so dass Wärme aus der Abgasrückführung zur Verdampfung des Arbeitsmediums herangezogen wird. Unter Verdampfung des Arbeitsmediums ist jegliche Art von Wärmeübertragung in das Arbeitsmedium zu verstehen, ungeachtet dessen, ob am Ende des Wärmetauschers, in welchem die Wärmeübertragung stattfindet, auf der Arbeitsmediumseite bereits das Arbeitsmedium im dampfförmigen Zustand oder teilweise dampfförmigen Zustand vorliegt, oder noch nicht, und im letzteren Fall insbesondere in einem weiteren Wärmetauscher vollständig verdampft wird.

Gemäß der erfindungsgemäßen Ausführungsform sind in der Abgasrückführung, das heißt in der eingangs beschriebenen Rückführungsleitung, wenigstens zwei Wärmetauscher zur Verdampfung des Arbeitsmediums des Dampfkreislaufes vorgesehen. Das Abgas in der Rückführungsleitung strömt zunächst durch den ersten Wärmetauscher und anschließend durch den zweiten Wärmetauscher, wobei es in jedem Wärmetauschern Wärme an das Arbeitsmedium des Dampfkreislaufes abgibt. Das Arbeitsmedium des Dampfkreislaufes strömt entsprechend erst durch den zweiten Wärmetauscher in der Rückführungsleitung, anschließend durch einen weiteren Wärmetauscher, der in der Abgasleitung vorgesehen ist, welcher mit einem zur Weiterleitung an die Umgebung bestimmten Abgasstrom beaufschlagt ist, und schließlich durch den ersten Wärmetauscher in der Rückführungsleitung, Somit sind in der Rückführungsleitung zwei Wärmetauscher zur Verdampfung des Arbeitsmediums des Dampfkreislaufes mit zueinander verschiedenen Temperaturniveaus vorgesehen. Der zwischengeschaltete weitere Wärmetauscher in der Abgasleitung liegt hinsichtlich seines Temperaturniveaus, in der Regel aufgrund einer in der Abgasleitung vorgeschalteten Abgasturbine und/oder eines Dieselpartikelfilters, auf einem Temperaturniveau zwischen den Temperaturniveaus des ersten und des zweiten Wärmetauschers in der Rückführungsleitung.

Wenn erfindungsgemäß ein Wärmetauscher zur Verdampfung des Arbeitsmediums des Dampfkreislaufes in der Abgasrückführung vorgesehen ist, so kann insbesondere dann auf den herkömmlichen Wasser-Gas-Wärmetauscher des Fahrzeugkühlsystems, mittels welchem die Wärme aus dem durch die Abgasrückführung geleiteten Abgasstromanteils in das Kühlwasser geleitet wurde, verzichtet werden, oder ein entsprechend kleiner dimensionierter Wasser-GasWärmetauscher des Fahrzeugkühlsystems, durch welchen Kühlwasser geleitet wird, kann zusätzlich vorgesehen sein. Dadurch, dass durch Nutzung von Wärme aus der Abgasrückführung für den Dampfkreislauf beziehungsweise zur Erzeugung von Dampf weniger Wärme als herkömmlich in das Kühlwasser eingetragen wird, ist es möglich, das Fahrzeugkühlsystem für eine geringere maximale Kühlleistung auszulegen, beispielsweise indem der Kühler, mittels welchem die Wärme aus dem Kühlwasser an die Umgebung abgeführt wird, verkleinert wird, oder der Kühlwasserstrom im Fahrzeugkühlsystem verringert wird.

Eine weitere Wärmequelle, die alternativ oder zusätzlich zur Erzeugung von Dampf, das heißt zur Verdampfung des Arbeitsmediums des Dampfkreislaufes herangezogen werden kann, ist bei einem Antriebsstrang mit aufgeladenem Verbrennungsmotor in Strömungsrichtung der Frischluft hinter einem Verdichter angeordnet, welcher die Frischluft verdichtet und insbesondere über eine Abgasturbine im Abgasstrom des Verbrennungsmotors angetrieben wird. Selbstverständlich ist es auch möglich, mit einem solchen Verdichter ein Gemisch aus Frischluft und Abgas zu verdichten und/oder den Verdichter anders als mit einer Abgasturbine anzutreiben, beispielsweise über die Kurbelwelle des Verbrennungsmotors. Ferner ist es möglich, einen einzigen Verdichter im Zuluftleitungssystem vorzusehen, hinter welchem in Strömungsrichtung der Frischluft dann der Wärmetauscher zur Dampferzeugung positioniert wird. Alternativ ist es möglich, mehrere Verdichter hintereinander oder einen mehrstufigen Verdichter im Zuluftleitungssystem vorzusehen, und dann einen entsprechenden Wärmetauscher zur Dampferzeugung zwischen zwei Verdichtern beziehungsweise zwischen zwei Verdichterstufen oder hinter mehreren oder allen Verdichtern beziehungsweise Verdichterstufen anzuordnen. Somit kann auch die bei der Verdichtung der Zuluft anfallende Wärme sinnvoll zum Betreiben der Expansionsmaschine und damit zum Erzeugen von Antriebsleistung verwendet werden.

Die Erfindung soll nachfolgend anhand von Ausführungsbeispielen exemplarisch beschrieben werden.

Es zeigen:
- Figur 1: einen erfindungsgemäßen Antriebsstrang mit einer Vielzahl von zur Dampferzeugung verwendeten Wärmetauschern in der Abgasrückführung und einem weiteren Wärmetauscher im Abgasstrom des Verbrennungsmotors;
- Figur 2: eine Ausführungsform gemäß der Figur 1, jedoch mit einem zusätzlich integrierten Turbocompound-System;
- Figur 3: ein nicht erfindungsgemäßes Ausführungsbeispiel mit einer Stromaufteilung des Arbeitsmediums des Dampfkreislaufes auf parallel geschaltete Wärmetauscher in der Abgasrückführung und der Abgasleitung;
- Figur 4: eine Abwandlung gegenüber der Figur 3.

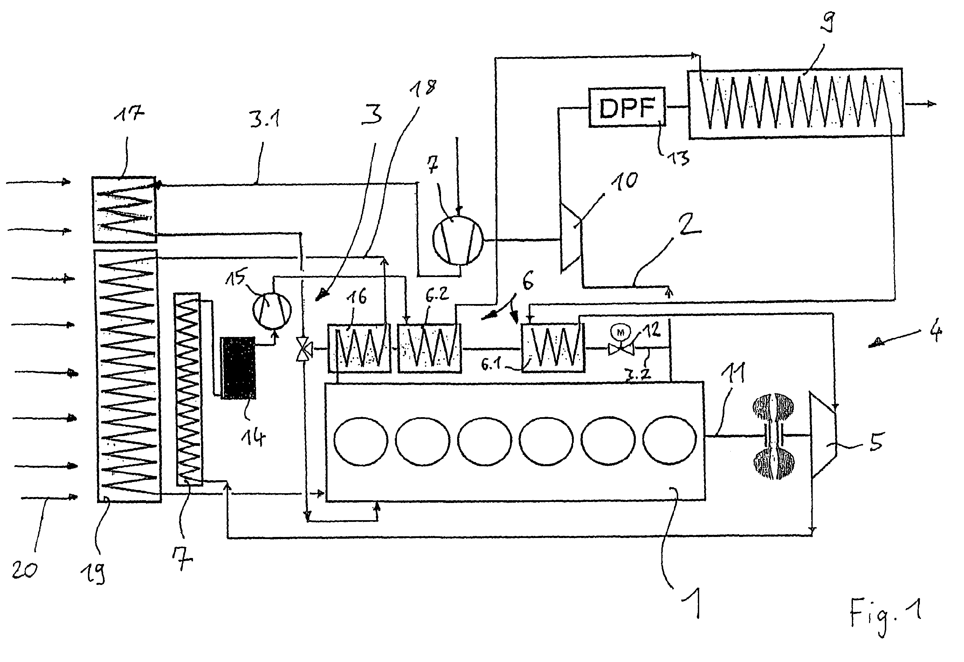

In der Figur 1 erkennt man einen Verbrennungsmotor 1 mit einer Abgasleitung 2 und einem Zuluftsystem 3. Das Zuluftsystem 3 umfasst eine Frischluftleitung 3.1, in welcher ein Verdichter 7 angeordnet ist. Die verdichtete Frischluft wird mit einem über eine Rückführungsleitung 3.2 auf die Frischluftseite des Verbrennungsmotors 1 rückgeführten Anteil des Abgases gemischt und dem Verbrennungsmotor 1 zur Verbrennung zugeführt. Vorliegend ist die Menge des rückgeführten Anteils, welche durch die Rückführungsleitung 3.2 strömt, über ein Regelventil 12 regelbar.

Der Verdichter 7 zum Verdichten von Frischluft wird über eine Abgasturbine 10 angetrieben, die im Abgasstrom des Verbrennungsmotors 1 angeordnet ist. In Strömungsrichtung hinter der Abgasturbine 10 ist ein Partikelfilter 13 zum Ausfiltern von Partikeln, insbesondere Rußpartikeln, aus dem Abgasstrom angeordnet.

Erfindungsgemäß ist ein Dampfkreislauf 4 vorgesehen, in welchem Dampf erzeugt wird, der in einer Expansionsmaschine 5 expandiert und in einem Kondensator 7 kondensiert wird. Vorliegend dient die Expansionsmaschine 5, beispielsweise in Form einer Dampfturbine oder einer Kolbenmaschine, zum Einleiten von Antriebsleistung auf die Kurbelwelle 11 des Verbrennungsmotors. Alternativ wäre es auch möglich, mit der Expansionsmaschine 5 ein Nebenaggregat des Antriebsstranges anzutreiben, oder - bei einer Verwendung in einem Kraftfahrzeug - über eine andere Triebverbindung Antriebsleistung auf die Antriebsräder einzuleiten.

Bei der gezeigten Ausführungsform wird der kondensierte Dampf in einen Sammelbehälter 14 geleitet und anschließend durch eine Pumpe 15, um das Arbeitsmedium des Dampfkreislaufes 4 in dem Dampfkreislauf umzuwälzen beziehungsweise das Arbeitsmedium auf den erforderlichen Druck zu bringen.

Bei der in der Figur 1 dargestellten Ausführungsform sind in der Rückführungsleitung 3.2 des Zuluftleitungssystems 3 drei Wärmetauscher 6.1, 6.2 und 16 angeordnet, welche in Strömungsrichtung des rückgeführten Abgases in der genannten Reihenfolge nacheinander durchströmt werden, bevor das Abgas mit der Frischluft aus der Frischluftleitung 3.1 gemischt wird. Demnach wird dem ersten Wärmetauscher 6.1 der rückgeführte Anteil des Abgasstromes mit einer höheren Temperatur zugeleitet als dem zweiten Wärmetauscher 6.2, und der dritte Wärmetauscher 16 wird nur dann vorgesehen oder eine Kühlung des rückgeführten Abgases findet nur dann statt, wenn dies aufgrund einer zu hohen Austrittstemperatur des rückgeführten Abgasstromes aus dem zweiten Wärmetauscher 6.2 notwendig ist.

Das Arbeitsmedium des Dampfkreislaufes 4 wird zunächst durch den zweiten Wärmetauscher 6.2 in der Rückführungsleitung 3.2 geleitet, bevor es in den ersten Wärmetauscher 6.1 in der Rückführungsleitung 3.2 eintritt. Ferner ist im Dampfkreislauf zwischen dem zweiten Wärmetauscher 6.2 und dem ersten Wärmetauscher 6.1 ein weiterer Wärmetauscher 9 vorgesehen, um das Arbeitsmedium des Dampfkreislaufes 4 zu erhitzen beziehungsweise zu verdampfen. Dieser weitere Wärmetauscher 9 ist im Abgasstrom jenes Anteils von Abgas angeordnet, der nach dem Durchströmen des weiteren Wärmetauschers 9 an die Umgebung abgegeben wird. Vorliegend ist der weitere Wärmetauscher 9 in Strömungsrichtung des Abgases hinter dem Partikelfilter 13 vorgesehen.

Die gezeigte Vielzahl von Wärmetauschern und die vorliegend beschriebene spezifische Durchströmungsreihenfolge derselben mit Abgas und Arbeitsmedium des Dampfkreislaufes 4 optimiert den Wärmeeintrag in das Arbeitsmedium mittels des Temperaturniveaus, auf welchem die jeweilige Wärmeübertragung stattfindet.

Dabei kann jedoch von der gezeigten Ausführungsform abgewichen werden, beispielsweise kann der weitere Wärmetauscher 9 an einer anderen Position im Abgasstrom vorgesehen sein. Alternativ oder zusätzlich könnten in der Rückführungsleitung 3.2 drei oder mehr arbeitsmediumdurchströmte Wärmetauscher vorgesehen sein. Schließlich könnte, wie dargestellt, der kühlwasserdurchströmte Wärmetauscher 16 eingespart werden oder auch beispielsweise durch einen Abgas-Kühlluft-Wärmetauscher oder sonstigen Wärmetauscher ersetzt werden.

Selbstverständlich ist es möglich, den Partikelfilter 13 einzusparen oder an einer anderen Stelle im Abgasstrom zu positionieren. Alternativ oder zusätzlich ist die Verwendung eines SCR-Systems zur selektiven katalytischen Reduktion von Stickoxiden im Abgas möglich, beispielsweise an der Position des Partikelfilters 13 oder hinter diesem beziehungsweise auch natürlich an einer anderen Position. Auch kann ein SCRT®-System (selective catalytic reduction trap), eine Kombination aus CRT® und SCR-System vorgesehen sein. Ein CRT® kombiniert die Wirkung eines Partikelfilters mit der eines Oxidationskatalysators.

Bei der in der Figur 1 gezeigten Ausführungsform wird die im Verdichter 7 in der Frischluftleitung 3.1 verdichtete Frischluft (Ladeluft) in einem luftgekühlten Wärmetauscher 17 des Kühlsystems, bei einer Anwendung in einem Kraftfahrzeug, insbesondere Kraftfahrzeugkühlsystems, gekühlt, bevor sie mit dem rückgeführten Abgas gemischt wird. Eine entsprechende Kühlung könnte zusätzlich oder alternativ auch nach der Mischung vorgesehen sein. Besonders vorteilhaft könnte ein entsprechender Wärmetauscher oder mehrere Wärmetauscher zum Kühlen dieser verdichteten Frischluft, vor oder hinter ihrer Mischung mit dem rückgeführten Abgas, durch das Arbeitsmedium des Dampfkreislaufes 4 "gekühlt" werden, so dass auch diese anfallende Wärme zur Dampferzeugung genutzt werden könnte.

In der Figur 1 ist mit 18 ein Kühlwasserkreislauf bezeichnet, in dem ein Kühler 19 (Wasser-Luft-Kühler) wie bekannt angeordnet ist. Mit 20 ist die entsprechende Kühlluft, die durch den Kühler 19 beziehungsweise den Wärmetauscher 17 geleitet wird, bezeichnet. Wie man sieht, dient das Kühlwasser im Kühlreislauf - insbesondere Fahrzeugkühlkreislauf - zum Kühlen des Verbrennungsmotors 1 und, bei der speziellen gezeigten Ausgestaltung, zum zusätzlichen Herunterkühlen des rückgeführten Abgasstromes, nachdem diesem die maximal mögliche Wärme mittels des Dampfkreislaufes 4 entzogen wurde.

Bei der gezeigten Ausführungsform wird der Kondensator 7 ebenfalls mit der Kühlluft 20 beaufschlagt.

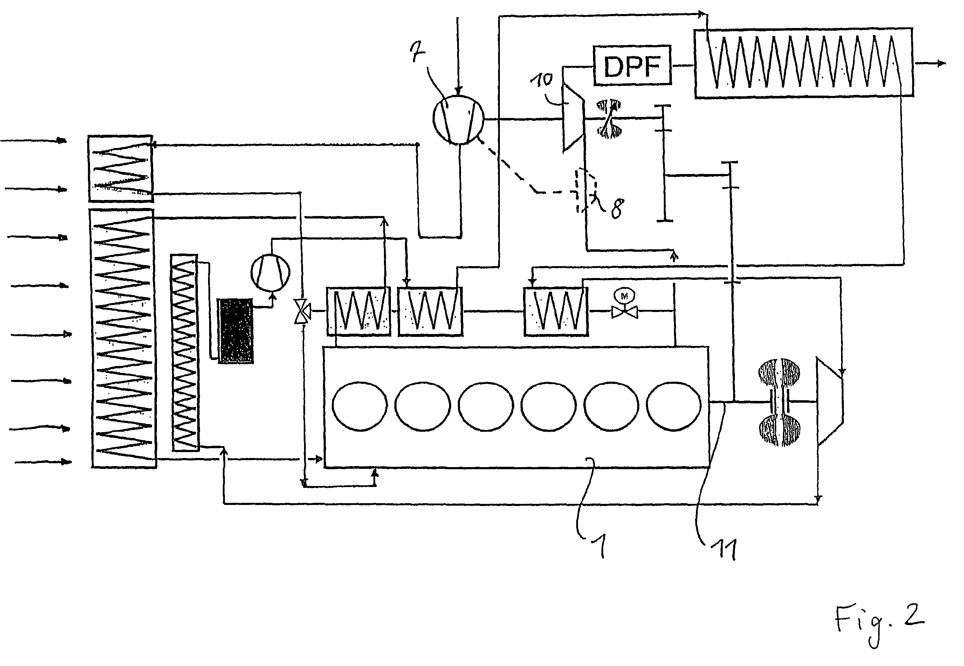

Bei der in der Figur 2 dargestellten Ausführungsform, zu welcher das in der Figur 1 beschriebene entsprechend gilt, wird Antriebsleistung der Abgasturbine 10 zusätzlich auf die Kurbelwelle 11 des Verbrennungsmotors 1 übertragen, hier über ein entsprechendes Getriebe. Bei einer Umkehrung der Leistungsrichtung kann somit der Verdichter 7 zur Verdichtung der Frischluft mittels dem Verbrennungsmotor 1 angetrieben werden, vorteilhaft immer dann, wenn nur ein vergleichsweise geringer Abgasstrom zur Verfügung steht. Hierdurch kann das sogenannte Turboloch vermindert oder vermieden werden.

Wie gestrichelt angedeutet, kann der Verdichter 7 auch über eine zusätzlich zu der Abgasturbine 10 im Abgasstrom beziehungsweise der Abgasleitung 2 vorgesehene, in der Regel hinsichtlich der Abgasströmungsrichtung der Abgasturbine 10 vorgeschaltete Abgasturbine 8 (Turboladerturbine) angetrieben werden und die Abgasturbine 10 (dann als Abgasnutzturbine bezeichnet) ausschließlich zum Einleiten von Antriebsleistung auf die Kurbelwelle 11 des Verbrennungsmotors 1 verwendet werden, um ein Turbocompound-System auszubilden.

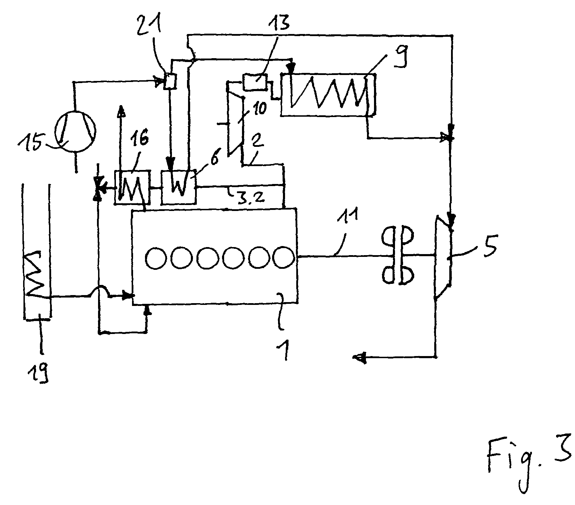

Die Figur 3 zeigt eine Ausführungsform, bei welcher sich entsprechende Bauteile mit sich entsprechenden Bezugszeichen gekennzeichnet sind. In der Figur 3 sind jedoch nicht alle in den Figuren 1 und 2 ausführlich dargelegten Bauteile dargestellt. Man erkennt wiederum den Verbrennungsmotor 1, dessen Kurbelwelle 11 über eine hydrodynamische Kupplung, welche beispielsweise wie bei den zuvor dargestellten Ausführungsbeispielen regelbar oder nicht regelbar ausgeführt ist, mit einer Expansionsmaschine 5 in einer Triebverbindung steht beziehungsweise in eine solche schaltbar ist. Anstelle einer hydrodynamischen Kupplung kann auch eine andere nichthydrodynamische, insbesonders regelbare Kupplung vorgesehen sein. Der Verbrennungsmotor 1 wird mittels eines Kühlmediums (in der Regel Kühlwasser), das in einem Kühlkreislauf umgewälzt wird, gekühlt, siehe den angedeuteten Kühler 19. Insoweit kann auf die Beschreibung in der Figur 1 verwiesen werden. Wiederum ist eine Rückführungsleitung 3.2 für rückgeführtes Abgas vorgesehen, sowie eine Abgasleitung 2 mit einer Abgasturbine 10 und einem Dieselpartikelfilter 13. Selbstverständlich könnte auf die Abgasturbine 10 und/oder den Dieselpartikelfilter 13 verzichtet werden, wenn dies gewünscht ist. Hinsichtlich weiterer Abgasbehandlungen gilt das oben Ausgeführte.

Das Arbeitsmedium des Dampfkreislaufes strömt aus der Pumpe 15 in ein Steuerorgan 21. Prinzipiell wäre es möglich, dass das Arbeitsmedium, bevor es in das Steuerorgan 21 eintritt, einen oder mehrere weitere Wärmetauscher (nicht dargestellt) durchströmt, beispielsweise einen Wärmetauscher im Fahrzeugkühlkreislauf und/oder einen Wärmetauscher zur Zwischenkühlung von verdichteter Frischluft (Ladeluftkühler). Das Steuerorgan 21 bewirkt eine Aufteilung des Arbeitsmediumstromes des Dampfkreislaufes in Richtung zu einem Wärmetauscher 6 in der Rückführungsleitung 3.2 und in Richtung zu einem weiteren Wärmetauscher 9 in der Abgasleitung 2. Hinter diesen beiden Wärmetauschern 6, 9 wird der Arbeitsmediumstrom des Dampfkreislaufes wieder zusammengeführt und der Expansionsmaschine 5 zugeleitet. Auch hier könnten natürlich weitere Wärmetauscher vorgesehen sein.

Das Steuerorgan 21 wird in der Regel mittels einer Steuervorrichtung derart angesteuert, dass die Aufteilung des Arbeitsmediumstroms im Dampfkreislauf auf die beiden Wärmetauscher 6 und 9 in Abhängigkeit einer oder mehrerer vorgegebener Eingangsgrößen erfolgt, die erfasst oder berechnet werden können.

Eine solche Eingangsgröße kann beispielsweise eine Temperatur an einer bestimmten Stelle im Abgasstrom, im Antriebsstrang oder im Dampfkreislauf sein. Auch die Drehzahl, das Drehmoment und/oder die Leistungsabgabe des Verbrennungsmotors 1 könnte als Eingangsgröße herangezogen werden. Weitere Eingangsgrößen sind denkbar.

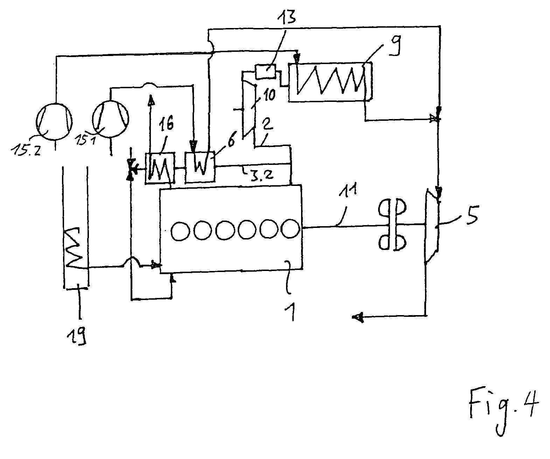

Die Figur 4 zeigt eine Abwandlung gegenüber der Figur 3, bei welcher die Aufteilung des Arbeitsmediumstroms im Dampfkreislauf auf die beiden parallelen Wärmetauscher 6 und 9 nicht mittels eines den Arbeitsmediumstrom aufteilenden Steuerorgans, sondern durch zwei parallel zueinander geschaltete Pumpen 15.1 und 15.2 erreicht wird. So fördert die Pumpe 15.1 den Arbeitsmediumstrom im Dampfkreislauf durch den Wärmetauscher 6 in der Rückführungsleitung 3.2, und die Pumpe 15.2 fördert den Arbeitsmediumstrom des Dampfkreislaufes durch den weiteren Wärmetauscher 9 in der Abgasleitung 2. Wenn die Pumpen 15.1 und 15.2 regelbar oder steuerbar hinsichtlich ihrer Förderleistung, insbesondere drehzahlgesteuert oder drehzahlgeregelt ausgeführt sind, kann der Arbeitsmediumvolumenstrom beziehungsweise der Arbeitsmediummassenstrom in jedem der parallelen Zweige des Dampfkreislaufes, im Zweig mit dem Wärmetauscher 6 und im Zweig mit dem Wärmetauscher 9, individuell gesteuert beziehungsweise geregelt werden. Die Pumpen 15.1 und 15.2 können ebenso wie die Pumpe 15 in den vorherigen Ausführungsbeispielen beispielsweise als Verdrängungsmaschine ausgeführt sein. Jedoch sind andere Ausführungen, beispielsweise als Turbomaschine, möglich. Die beiden Pumpen 15.1 und 15.2, welche somit insbesondere individuell drehzahlgesteuert oder drehzahlgeregelt sind, fördern beispielsweise aus einem gemeinsamen Sammelbehälter für Arbeitsmedium, beispielsweise wie er mit Bezug auf die Figur 1 dargestellt wurde.

Die beschriebene Erfindung kommt vorzugsweise in einem Kraftfahrzeug zur Anwendung. Jedoch ist auch eine Anwendung in einem stationären Antriebsstrang, beispielsweise in einem Blockheizkraftwerk, möglich. Bei einer Anwendung in einem Fahrzeug kann der Verbrennungsmotor (gegebenenfalls neben der zum Antrieb des Fahrzeugs verwendeten Expansionsmaschine 5) das einzige Antriebsaggregat zum Antreiben des Fahrzeugs sein, oder es können weitere Antriebsaggregate zum Antreiben des Fahrzeugs, beispielsweise ein Elektromotor, vorgesehen sein.

## Patentansprüche

1. Antriebsstrang, insbesondere für ein Nutzkraftfahrzeug,
1.1 mit einem Verbrennungsmotor (1), der einen Abgasstrom erzeugt;
1.2 mit einer Abgasleitung (2), die am Verbrennungsmotor (1) angeschlossen ist;
1.3 mit einem Zuluftleitungssystem (3), zum Zuführen eines Zuluftstromes für die Verbrennung im Verbrennungsmotor (1), das am Verbrennungsmotor (1) angeschlossen ist;
1.4 mit einem Dampfkreislauf (4), umfassend eine Expansionsmaschine (5), wenigstens einem Wärmetauscher (6), um das Arbeitsmedium des Dampfkreislaufes zu verdampfen, und einen Kondensator (7);
1.5 das Zuluftleitungssystem (3) umfasst eine Frischluftleitung (3.1) zum Zuführen eines Frischluftstromes für die Verbrennung im Verbrennungsmotor (1) und eine Rückführungsleitung (3.2) zum Rückführen eines Teiles des Abgasstromes auf die Frischluftseite für die Verbrennung im Verbrennungsmotor (1);
**dadurch gekennzeichnet, dass**
1.6 in der Rückführungsleitung (3.2) eine Vielzahl von Wärmetauschern (6.1, 6.2) zur Verdampfung des Arbeitsmediums des Dampfkreislaufes (4) vorgesehen ist, sowie ein weiterer Wärmetauscher (9) zur Verdampfung des Arbeitsmediums des Dampfkreislaufes (4) in der Abgasleitung (2) vorgesehen ist, welcher mit einem zur Weiterleitung an die Umgebung bestimmten Abgasstrom beaufschlagt ist, und das Arbeitsmedium des Dampfkreislaufes (4) zunächst durch einen zweiten Wärmetauscher (6.2) in der Rückführungsleitung (3.2), dann durch den weiteren Wärmetauscher (9) in der Abgasleitung (2) und im Anschluss durch einen ersten Wärmetauscher (6.1) in der Rückführungsleitung (3.2) geleitet wird, wobei der rückgeführte Teil des Abgasstromes zuerst durch den ersten Wärmetauscher (6.1) und anschließend durch den zweiten Wärmetauscher (6.2) geleitet und gekühlt wird.

2. Antriebsstrang gemäß Anspruch 1, **dadurch gekennzeichnet, dass** im Zuluftleitungssystem (3) ein Verdichter (7) angeordnet ist, der insbesondere von einer Abgasturbine (8, 10) im Abgasstrom angetrieben wird, und welcher insbesondere dem Verbrennungsmotor (1) zur Verbrennung zugeführte Frischluft verdichtet, und ein Wärmetauscher (6) im Zuluftleitungssystem (3) in Strömungsrichtung hinter dem Verdichter (7) angeordnet ist und mit der verdichteten Zuluft oder einem Gemisch aus verdichteter Zuluft und rückgeführtem Abgasstrom beaufschlagt wird und dieser/diesem Wärme zur Verdampfung des Arbeitsmediums des Dampfkreislaufes (4) entzieht.

3. Antriebsstrang gemäß Anspruch 2, **dadurch gekennzeichnet, dass** mehrere Verdichter (7) oder ein mehrstufiger Verdichter im Zuluftleitungssystem vorgesehen ist, und der Wärmetauscher (6) in Strömungsrichtung zwischen den Verdichtern (7) oder Verdichterstufen angeordnet ist, oder jeweils ein Wärmetauscher (6) in Strömungsrichtung hinter einem und insbesondere hinter jedem Verdichter (7) angeordnet ist.

4. Antriebsstrang gemäß einem der Ansprüche 1 bis 3, **dadurch gekennzeichnet, dass** der rückgeführte Teil des Abgasstromes im Anschluss an den Wärmetauscher (6) in der Rückführungsleitung (3.2) oder an den zweiten Wärmetauscher (6.2) durch einen in einem Kühlkreislauf, insbesondere Fahrzeugkühlkreislauf, eingebundenen Wärmetauscher (16) geleitet und gekühlt wird.

5. Antriebsstrang gemäß einem der Ansprüche 1 bis 4, **dadurch gekennzeichnet, dass** im Abgasstrom eine Abgasturbine (10) angeordnet ist, mittels welcher Antriebsenergie auf eine Kurbelwelle (11) des Verbrennungsmotors (1) übertragbar ist, und der Teil des Abgasstromes, welcher durch die Rückführungsleitung (3.2) geleitet wird, in Strömungsrichtung vor der Abgasturbine (10) aus dem Abgasstrom abgezweigt wird.

6. Antriebsstrang gemäß Anspruch 5, **dadurch gekennzeichnet, dass** der weitere Wärmetauscher (9) in Strömungsrichtung hinter der Abgasturbine (10) im Abgasstrom angeordnet ist.

## Claims

1. Drive train, in particular for a commercial vehicle,
1.1 with a combustion engine (1) producing an exhaust gas stream;
1.2 with an exhaust pipe (2) connected to the combustion engine (1);
1.3 with a supply air pipe system (3), for supplying a supply air flow for the combustion in the combustion engine (1) connected to the combustion engine (1);
1.4 with a steam circuit (4) comprising an expansion machine (5), at least one heat exchanger (6) to evaporate the working medium of the steam circuit, and a capacitor (7);
1.5 the supply air pipe system (3) comprises a fresh air pipe (3.1) for supplying a fresh air flow for the combustion in the combustion engine (1) and a return pipe (3.2) for returning a portion of the exhaust flow to the fresh air side for the combustion in the combustion engine (1);
**characterized in that**
1.6 a plurality of heat exchangers (6.1, 6.2) is provided in the return pipe (3.2) for evaporation of the working medium of the steam circuit (4), and an additional heat exchanger (9) for evaporation of the working medium of the steam circuit (4) is provided in the exhaust pipe (2), which is charged with an exhaust gas flow intended for discharge to the environment, and the working medium of the steam circuit (4) is initially passed through a second heat exchanger (6.2) in the return pipe (3.2), then through the additional heat exchanger (9) in the exhaust pipe (2) and subsequently through a first heat exchanger (6.1) in the return pipe (3.2), and the returned portion of the exhaust gas flow is passed through the first heat exchanger (6.1) first and then through the second heat exchanger (6.2) and cooled.

2. Drive train according to claim 1, **characterized in that** a compressor (7) is arranged in the supply air pipe system (3), which is in particular driven by an exhaust gas turbine (8, 10) in the exhaust gas flow, and which in particular compresses fresh air supplied to the combustion engine (1) for combustion, and a heat exchanger (6) is arranged in the supply air pipe system (3) in the direction of flow downstream of the compressor (7) and charged with the compressed supply air or a mixture of compressed supply air and returned exhaust gas flow and extracts heat from them for evaporation of the working medium of the steam circuit (4).

3. Drive train according to claim 2, **characterized in that** several compressors (7) or a multi-stage compressor are provided in the supply air pipe system, and the heat exchanger (6) is arranged in the direction of flow between the compressors (7) or compressor stages, or one heat exchanger (6) each is arranged in the direction of flow downstream of one and in particular downstream of every compressor (7).

4. Drive train according to any of claims 1 to 3, **characterized in that** the returned portion of the exhaust gas flow following the heat exchanger (6) in the return pipe (3.2) or the second heat exchanger (6.2) is passed through a heat exchanger (16) incorporated in a cooling cycle, in particular vehicle cooling cycle, and is cooled.

5. Drive train according any of claims 1 to 4, **characterized in that** an exhaust gas turbine (10) is arranged in the exhaust gas flow, which allows the transfer of driving power to a crank shaft (11) of the combustion engine (1), and the portion of the exhaust gas flow, which is passed through the return pipe (3.2) is branched off from the exhaust gas flow in the direction of flow upstream of the exhaust gas turbine (10).

6. Drive train according to claim 5, **characterized in that** the additional heat exchanger (9) is arranged in the direction of flow downstream of the exhaust gas turbine (10) in the exhaust gas flow.

## Revendications

1. Groupe propulseur, notamment pour un véhicule utilitaire,
1.1 équipé d'un moteur à combustion (1) qui génère un courant de gaz d'échappement ;
1.2 avec une conduite de gaz d'échappement (2) raccordée au moteur à combustion (1) ;
1.3 avec un système d'amenée d'air (3), destiné à alimenter un débit d'air pour la combustion dans le moteur à combustion (1), branché au moteur à combustion (1) ;
1.4 avec un circuit à vapeur (4) comprenant une machine à expansion (5), au moins un échangeur thermique (6) afin de faire évaporer le liquide de travail du circuit à vapeur et un condensateur (7) ;
1.5 le système d'amenée d'air (3) comprend une conduite d'air frais (3.1) en vue d'alimenter un début d'air frais pour la combustion dans le moteur à combustion (1) et une conduite de retour (3.2) en vue de recycler une partie du débit de gaz d'échappement sur le côté air frais pour la combustion dans le moteur à combustion (1);
**caractérisé en ce que**
1.6 la conduite de retour (3.2) présente une multitude d'échangeurs thermiques (6.1, 6.2) destinés à l'évaporation du liquide de travail du circuit à vapeur (4), ainsi qu'un autre échangeur thermique (9), destiné à l'évaporation du liquide de travail du circuit à vapeur (4) dans la conduite de gaz d'échappement (2), lequel est alimenté au milieu d'un certain débit de gaz d'échappement par une conduite de transfert, et le liquide de travail du circuit à vapeur (4) est acheminé tout d'abord par un deuxième échangeur thermique (6.2) dans la conduite de retour (3.2), puis par l'autre échangeur thermique (9) dans la conduite de gaz d'échappement (2) et enfin par un premier échangeur thermique (6.1) dans la conduite de retour (3.2), sachant que la partie recyclée du débit de gaz d'échappement est acheminée et refroidie tout d'abord par le premier échangeur thermique (6.1) puis enfin par le deuxième échangeur thermique (6.2).

2. Groupe propulseur selon la revendication 1, **caractérisé en ce qu'**un compresseur (7), entraîné notamment par une turbine à gaz d'échappement (8, 10) dans un débit de gaz d'échappement, est disposé dans le système d'amenée d'air (3) et comprime notamment le moteur à combustion (1) en vue de la combustion de l'air frais amené, et un échangeur thermique (6) est disposé dans le système d'amenée d'air (3) derrière le compresseur (7) dans le sens du débit ou est alimenté par un mélange à base d'air comprimé et du débit de gaz d'échappement recyclé et élimine cette chaleur en vue de l'évaporation du liquide de travail du circuit à vapeur (4).

3. Groupe propulseur selon la revendication 2, **caractérisé en ce que** plusieurs compresseurs (7) ou un compresseur à plusieurs étages est disposé dans le système d'amenée d'air, et l'échangeur thermique (6) est disposé dans le sens du débit entre les compresseurs (7) ou les étages de compresseur, ou un échangeur thermique (6) est disposé respectivement dans le sens du débit derrière un et notamment derrière chaque compresseur (7).

4. Groupe propulseur selon l'une quelconque des revendications 1 à 3, **caractérisé en ce que** la partie recyclée du débit de gaz d'échappement est acheminée et refroidie pour finir au niveau de l'échangeur thermique (6) dans la conduite de retour (3.2) ou au niveau du deuxième échangeur thermique (6.2) par un échangeur thermique (16) relié à un circuit de refroidissement, notamment à un circuit de refroidissement de véhicule.

5. Groupe propulseur selon l'une quelconque des revendications 1 à 4, **caractérisé en ce qu'**une turbine à gaz d'échappement (10) est disposée dans le débit de gaz d'échappement, à l'aide de laquelle de l'énergie d'entraînement est transmissible à un vilebrequin (11) du moteur à combustion (1), et la partie du débit de gaz d'échappement, acheminée par la conduite de retour (3.2), est bifurquée du débit de gaz d'échappement dans le sens du débit en aval de la turbine à gaz d'échappement (10).

6. Groupe propulseur selon la revendication 5, **caractérisé en ce que** l'autre échangeur thermique (9) est disposé dans le débit de gaz d'échappement derrière la turbine à gaz d'échappement (10) dans le sens du débit.
